# EUROPÄISCHE PATENTANMELDUNG

(11) **EP 1 110 666 A2**
(43) Veröffentlichungstag der Anmeldung: **27.06.2001**
(21) Anmeldenummer: 00127882.9
(22) Anmeldetag: 20.12.2000
(51) Int. Cl.: B23Q 11/00

(54) **Späneabsaugeinrichtung für Elektrowerkzeuge**

(30) Priorität: 23.12.1999 DE 19962486; 23.12.1999 DE 19962487
(71) Anmelder: Becher, Reinhard, D-70825 Korntal-Münchingen (DE)
(72) Erfinder: Becher, Reinhard, D-70825 Korntal-Münchingen (DE)
(74) Vertreter: Witte, Alexander, Dr.-Ing.

(57) **Zusammenfassung**

Eine Späneabsaugeinrichtung ist für Elektrowerkzeuge (45) vorgesehen. Sie umfaßt eine Saugdüse (82 bis 97). Das Elektrowerkzeug treibt ein rotierendes Werkzeug, insbesondere eine Schleifrolle (112), an. Die Saugdüse (82 bis 97) ist am Werkzeug gelagert und vorzugsweise radial zu dessen Drehachse (115) gerichtet (Fig. 6).

## Beschreibung

Die Erfindung betrifft eine Späneabsaugeinrichtung für Elektrowerkzeuge, mit einer Saugdüse, wobei das Elektrowerkzeug ein rotierendes Werkzeug antreibt.

Späneabsaugeinrichtungen der vorstehend genannten Art sind allgemein bekannt. Sie werden entweder als in das Elektrowerkzeug integrierte Systeme oder als Zubehörteile ausgeführt, die mit geeigneten Mitteln am Elektrowerkzeug befestigt werden. Durch die Späneabsaugeinrichtung werden die Späne oder Stäube abgesaugt, die beim Arbeiten mit dem betreffenden Werkzeug entstehen. Dies gilt insbesondere für Schleif- und Sägewerkzeuge unterschiedlicher Art.

Die herkömmlichen Späneabsaugeinrichtungen sind dann nur mit Umstand oder überhaupt nicht einsetzbar, wenn das Elektrowerkzeug nicht von Hand geführt sondern vielmehr mittels eines geeigneten Statives z.B. an einer Werkbank oder einem Werkzeugständer befestigt wird.

Dann ist es insbesondere schwierig, eine genaue Ausrichtung der Späneabsaugeinrichtung zum Eingriffsbereich des Werkzeugs herzustellen. Dies ist jedoch wichtig, wenn man bestrebt ist, die entstehenden Späne möglichst vollständig einzufangen und abzusaugen.

Bei einer bekannten Einrichtung ist die Düse an den Hals des Elektrowerkzeugs angeklemmt und erstreckt sich am Spannfutter vorbei bis in den Eingriffsbereich des Werkzeugs.

Diese Einrichtung ist zwar dann vorteilhaft, wenn das Elektrowerkzeug mit der Hand geführt wird, wie dies z.B. bei Schlagbohrern der Fall ist.

Wenn aber ein Elektrowerkzeug in einem Stativ eingespannt wird, so kann die bekannte Einrichtung nicht oder nur mit großen Umständen verwendet werden, weil normalerweise das Stativ zum Einspannen des Elektrowerkzeugs ebenfalls am Hals des Elektrowerkzeugs angreift, so daß dort nicht auch noch zusätzlich eine Späneabsaugeinrichtung befestigt werden kann.

Der Erfindung liegt daher die Aufgabe zugrunde, eine Späneabsaugeinrichtung der eingangs genannten Art dahingehend weiterzubilden, daß die vorstehend genannten Nachteile vermieden werden. Insbesondere soll eine genaue Zuordnung der Späneabsaugeinrichtung zu dem späneerzeugenden Abschnitt des Werkzeugs erreicht werden.

Diese Aufgabe wird bei einer Späneabsaugeinrichtung der eingangs genannten Art erfindungsgemäß dadurch gelöst, daß die Saugdüse am Werkzeug gelagert ist.

Die der Erfindung zugrunde liegende Aufgabe wird auf diese Weise vollkommen gelöst.

Wenn nämlich die genannte Lagerung hergestellt wird, so kann eine präzise räumliche Zuordnung zwischen Späneabsaugeinrichtung bzw. der Saugdüse und dem am Werkstück in Eingriff befindlichen Abschnitt des Werkzeugs hergestellt werden. Die erzeugten Späne können auf diese Weise praktisch vollkommen eingefangen und abgesaugt werden. Dies gilt vor allem deswegen, weil die Saugdüse dann sowohl hinsichtlich ihrer Position wie auch hinsichtlich ihrer Ausrichtung zum Werkzeug eingestellt werden kann, sofern die definierte Lagerverbindung hergestellt ist.

Bei einer bevorzugten Weiterbildung der erfindungsgemäßen Einrichtung ist die Saugdüse in einer Drehachse des Werkzeugs gelagert.

Diese Maßnahme hat den Vorteil, daß eine besonders präzise Positionierung und Ausrichtung möglich ist.

Dies gilt vor allem bei einer bevorzugten Weiterbildung dieses Ausführungsbeispiels, bei der das Werkzeug an einer radialen Stirnseite eine in der Drehachse liegende Aufnahme für einen mit der Saugdüse verbundenen Drehzapfen und an einer anderen radialen Stirnseite einen Dorn zum Einspannen in ein Spannfutter des Elektrowerkzeugs aufweist.

In diesem Falle ist die Lagerung der Späneabsaugeinrichtung definiert von der Einspannstelle des Werkzeugs getrennt, so daß insoweit keine Störungen auftreten können. Die beschriebene Anordnung eignet sich darüber hinaus besonders in den Fällen, in denen, wie erwähnt, das Elektrowerkzeug mittels eines geeigneten Stativs an einem Werktisch oder dgl. befestigt ist, weil dann die Drehachse des Werkzeugs definiert ist und feststeht, so daß die an der gegenüberliegenden Stirnseite gelagerte Späneabsaugeinrichtung ihrerseits mit dem Werktisch und dann mit einem geeigneten Staubsauger oder dgl. verbunden werden kann. Die Gesamtanordnung ist dann mechanisch definiert, und das Werkzeug kann sich frei zwischen Drehzapfen und Dorn drehen.

Bei einer Späneabsaugeinrichtung der eingangs genannten Art, die auch ohne die vorstehend genannten Merkmale ausgeführt sein kann, ist vorgesehen, daß die Saugdüse an einem Kragen eines Statives befestigt ist, mit dem das Elektrowerkzeug gehalten ist, wobei der Kragen den Hals des Elektrowerkzeugs zumindest teilweise umgreift.

Die der Erfindung zugrunde liegende Aufgabe wird auch auf diese Weise vollkommen gelöst, weil eine effektive Späneabsaugung auch bei Elektrowerkzeugen möglich wird, die mittels eines am Hals des Elektrowerkzeugs angreifenden Stativs eingespannt sind.

Wenn man nämlich am Stativ zum Einspannen des Elektrowerkzeugs einen Kragen vorsieht, so kann man an diesem Kragen wiederum die Späneabsaugeinrichtung befestigen. Das Elektrowerkzeug kann daher in einfacher Weise aus dem Stativ entnommen werden, ohne daß gleichzeitig auch die Späneabsaugeinrichtung gehandhabt werden muß. Diese verbleibt nämlich an dem Stativ, weil sie, wie erwähnt, an dessen Kragen befestigt ist.

Bei einem weiteren bevorzugten Ausführungsbeispiel der Erfindung ist die Saugdüse mit dem Elektrowerkzeug bzw. mit dem Kragen über ein verstellbares Gestänge verbunden.

Diese Maßnahme hat den Vorteil, daß die Saugdüse hinsichtlich Position und Ausrichtung nahezu beliebig verstellt werden kann, so daß ihre relative Lage zum Werkzeug optimiert werden kann.

Bei einer weiteren Gruppe von Ausführungsbeispielen ist die Saugdüse radial zum Werkzeug, insbesondere zu einer Drehachse des Werkzeugs gerichtet.

Diese Maßnahme hat den Vorteil, daß es bei bestimmten Werkzeugen ausreichend ist, die Saugdüse radial auf die Drehachse des Werkzeugs zu richten, um eine optimale Spanabfuhr zu gewährleisten. Dies gilt insbesondere bei Schleifscheiben und Schleifrollen, kann jedoch auch bei Kreissägen Verwendung finden.

Bei einer ersten alternativen Weiterbildung des vorstehend genannten Ausführungsbeispiels weist die Saugdüse eine Saugöffnung auf, die in ihrer Formgebung an ein in das Elektrowerkzeug eingespanntes Werkzeug angepaßt ist.

Diese Maßnahme hat den Vorteil, daß die entstehenden Späne über einen großen Umfangsbereich des Werkzeugs eingefangen werden können.

In besonderer Weise gilt dies dann, wenn die Formgebung der Öffnung ferner an eine durch das bewegte Werkzeug beeinflußte Flugbahn der Späne angepaßt ist.

Diese Maßnahme hat den Vorteil, daß unabhängig z.B. von der Drehzahl des Werkzeugs eine optimale Spanabsaugung möglich ist, weil auch zusätzliche Bewegungskomponenten der Späne berücksichtigt werden, die durch die Rotation des Werkzeugs selbst entstehen.

Bei einer bevorzugten praktischen Ausführungsform einer derartigen Einrichtung, bei der das Werkzeug eine scheibenförmige Gestalt aufweist, liegt die Öffnung kreisbogenförmig um einen Teil des Umfanges der Scheibe um.

Diese Maßnahme hat insbesondere bei Schleifscheiben, aber auch bei Kreissägen, den Vorteil, daß die Späne genau dort aufgefangen werden, wo sie aus dem Eingriffsbereich des Werkzeugs austreten.

Dies gilt insbesondere dann, wenn die Öffnung einen Umfangswinkel der Scheibe von vorzugsweise 40° bis 140°, insbesondere etwa 100° übergreift.

Bei einer anderen Alternative einer erfindungsgemäßen Einrichtung ist die Saugdüse im wesentlichen rohrförmig.

Diese Maßnahme hat den Vorteil, daß bei einigen Anwendungsfällen, z.B. im Zusammenhang mit Schleifrollen, es ausreichend sein kann, wenn die im wesentlichen rohrförmige Saugdüse radial auf die Schleifrolle gerichtet ist.

Zum Abführen der Späne von der Düse sind unterschiedliche Varianten denkbar.

Bei einer bevorzugten Ausführungsform weist die Saugdüse unmittelbar einen Stutzen zum Aufschieben eines Saugschlauches auf.

Bei einer anderen Alternative weist hingegen die Saugdüse einen ersten Stutzen zum Aufschieben eines Saugteils auf, wobei das Saugteil mit Verstellmitteln der relativen Lage zwischen Saugdüse und Elektrowerkzeug versehen ist.

Diese Maßnahme hat den Vorteil, daß das Saugteil als Adapterstück zwischen Saugdüse und Schlauch zusätzlich die bereits erwähnte Positionierung und Ausrichtung der Saugdüse gestattet.

Bei einer Weiterbildung dieser Variante weist das Saugteil ein Rohr auf, das den ersten Stutzen mit dem zweiten Stutzen verbindet, und es ist ein Saugschlauch auf den zweiten Stutzen aufschiebbar.

Bei dieser Ausführungsform der Erfindung werden also die vorstehend genannten Vorteile miteinander kombiniert.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematisierte Seitenansicht einer Spannvorrichtung für ein Elektrowerkzeug;
- Fig. 2: in verkleinertem Maßstab eine Draufsicht auf einen Arm, wie er bei der Spannvorrichtung gemäß Fig. 1 verwendet wird;
- Fig. 3: eine weitere schematisierte Seitenansicht einer anderen Spannvorrichtung für ein Elektrowerkzeug;
- Fig. 4: eine Draufsicht auf ein Detail aus Fig. 1, darstellend eine Absaugvorrichtung für im Betrieb des Elektrowerkzeuges anfallende Späne;
- Fig. 5A, 5B und 5C: drei Ansichten eines Saugteils, wie es bevorzugt in Verbindung mit der Absaugeinrichtung gemäß Fig. 4 verwendet wird;
- Fig. 6: eine weitere schematisierte Seitenansicht einer Spannvorrichtung für eine von einem Elektrowerkzeug angetriebene Schleifrolle, in Verbindung mit einer zugehörigen Absaugeinrichtung für anfallende Späne;
- Fig. 7: als Detail einen Querschnitt durch ein Unrundprofil, wie es bei der Anordnung gemäß Fig. 6 verwendet wird;
- Fig. 8A und 8B: in vergrößertem Maßstab die Schleifrolle aus Fig. 6, einmal in Seitenansicht, einmal im Längsschnitt;
- Fig. 9A, 9B und 9C: Radialschnitte durch die Schleifrolle gemäß Fig. 8A und 8B in drei verschiedenen Betriebszuständen.

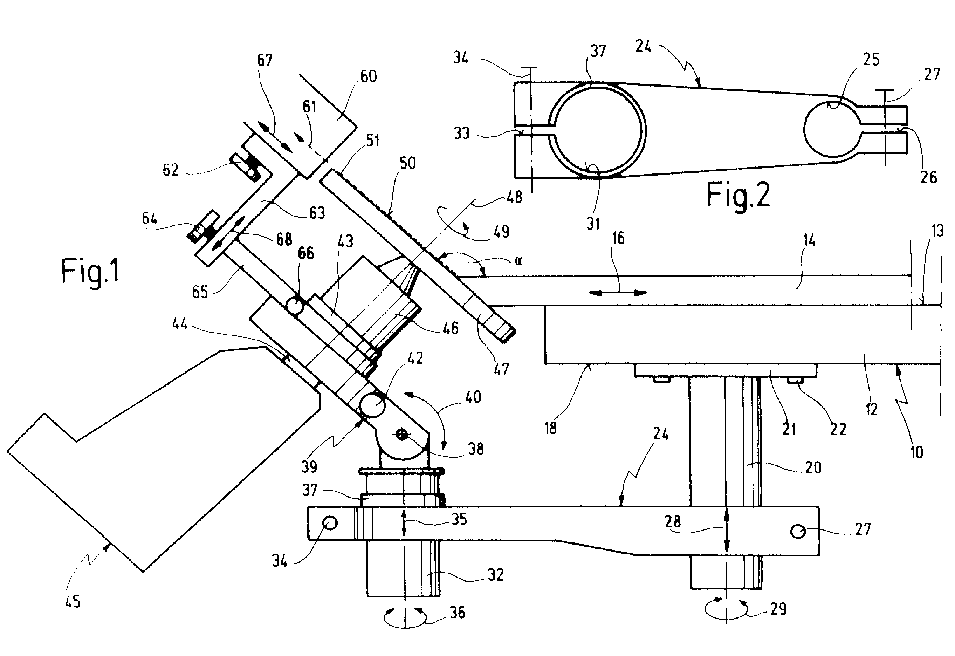

In Fig. 1 bezeichnet 10 einen nur ausschnittsweise angedeuteten Werktisch, wie er in Werkstätten verwendet wird. Unter "Werkstatt" ist dabei sowohl die Werkstatt eines professionellen Handwerkers zu verstehen wie auch eine Hobbywerkstatt. Der Werktisch 10 ist von üblicher Bauart. Er umfaßt eine Tischplatte 12, auf deren Oberseite 13 ein Werkstück 14, im dargestellten Beispielsfall eine Holzleiste, zu erkennen ist. Das Werkstück 14 wird in Richtung eines Pfeils 16 auf der Oberseite 13 der Tischplatte 12 vorgeschoben, um an seinem vorderen freien Ende geschliffen zu werden, wie noch im einzelnen beschrieben werden wird.

Gegen eine Unterseite 18 der Tischplatte 12 ist ein vertikal nach unten abstehendes Profil 20, im dargestellten Beispielsfall ein Rundprofil, geschraubt. Hierzu ist das Profil 20 mit einem Flansch 21 versehen, der mittels geeigneter Schrauben 22 an die Unterseite 18 der Tischplatte 12 geschraubt werden kann.

Das Profil 20 ist durch einen ersten Arm 24 hindurchgesteckt. Hierzu weist der erste Arm 24, wie sich aus der verkleinerten Draufsicht gemäß Fig. 2 ergibt, eine erste Aufnahmeöffnung 25 auf. Die erste Aufnahmeöffnung 25 ist in ihrer Formgebung (z.B. kreisförmig) an den Außenumfang des Profils 20 (Rundprofil) angepaßt. Mittels eines seitlichen Schlitzes 26 im ersten Arm 24 und einer durch den Schlitz 26 geführten Schraube 27 kann das Profil 20 in der ersten Aufnahmeöffnung 25 reibschlüssig fixiert werden. Mit der dargestellten Anordnung ist es daher möglich, den ersten Arm 24 in seiner Höhe am Profil 20 zu verschieben (Pfeil 28) oder um das Profil 20 zu drehen (Pfeil 29), um ihn dann am Profil 20 in der beschriebenen Weise in der gewünschten Stellung zu fixieren.

Am gegenüberliegenden Ende des ersten Armes 24 befindet sich eine zweite Aufnahmeöffnung 31. Durch die zweite Aufnahmeöffnung 31 ist ein Elektrowerkzeughalter 32, bspw. ein üblicher Handgriff einer Bohrmaschine oder dgl., gesteckt. Zur Fixierung des Elektrowerkzeughalters 32 in der zweiten Aufnahmeöffnung 31 ist der erste Arm 24 auch dort mit einem zur zweiten Aufnahmeöffnung 31 durchgehenden Schlitz 33 versehen, und es ist wiederum eine Schraube 34 durch den Schlitz 33 geführt. Somit ist auch hier eine Einstellbarkeit des Elektrowerkzeughalters 32 relativ zum ersten Arm 24 in der Höhe (Pfeil 35) sowie in Drehrichtung (Pfeil 36) gegeben. Die zweite Aufnahmeöffnung 31 ist von einem Kragen 37 umgeben, der vom ersten Arm 24 absteht (Fig. 1). Am Kragen 37 kann im Bedarfsfall ein Zubehör, z.B. eine Absaugeinrichtung, befestigt werden.

Der Elektrowerkzeughalter 32 ist an seinem oberen Ende mit einem horizontalachsigen Gelenk 38 versehen. Dort ist an den Elektrowerkzeughalter 32 ein zweiter Arm 39 angelenkt und somit um die Achse des Gelenks 38 verschwenkbar, wie mit einem Pfeil 40 angedeutet.

Der zweite Arm 39 weist eine dritte Aufnahmeöffnung (nicht dargestellt) auf, um mittels einer Schraube 42 ein Objekt zu fixieren. Die dritte Aufnahmeöffnung ist, ähnlich wie die zweite Aufnahmeöffnung 31, mit einem vom zweiten Arm 39 abstehenden Kragen 43 versehen. Der Kragen 43 dient zum Befestigen eines Zubehörs, im dargestellten Ausführungsbeispiel einer Späneabsaugeinrichtung, wie noch geschildert werden wird. Im dargestellten Fall wird ein Hals 44 eines Elektrowerkzeugs 45 eingespannt. Das Elektrowerkzeug 45 ist im dargestellten Beispielsfall eine Bohrmaschine, kann aber auch eine Kreissäge, Stichsäge, ein Winkelschleifer, ein Dreieckschleifer oder ein anderes Elektrowerkzeug sein.

Das Zubehör kann mittels einer geeigneten Spannvorrichtung, ähnlich den Elementen 25/26/27 bzw. 31/33/34/37, am Kragen 43 reibschlüssig befestigt werden. Es verbleibt dann am zweiten Arm 39 auch dann, wenn das Elektrowerkzeug 45 durch Lösen der Schraube 42 ausgespannt wird.

Das Elektrowerkzeug 45 ist mit einem Spannfutter 46 versehen, in das eine kreisförmige Schleifscheibe 47 eingespannt ist, wie man in Fig. 1 in der Seitenansicht erkennt. Die Schleifscheibe 47 ist um ihre Achse 48 drehbar (Pfeil 49), die mit der Achse des Spannfutters 46 und des Elektrowerkzeugs 45 zusammenfällt.

Eine Oberfläche der Schleifscheibe 47 ist mit 50 bezeichnet. Wie eingangs bereits angemerkt wurde, wird bei der Darstellung in Fig. 1 ein Werkstück 14 auf der Oberseite 13 der Tischplatte 12 nach links verschoben, so daß das vordere freie Ende des Werkstücks 14, also bspw. einer Holzleiste, in Eingriff mit der Oberfläche 50 der Schleifscheibe 47 gelangt. Dabei fallen Schleifspäne 51 an.

Durch die diversen beschriebenen Verstellmechanismen kann das Elektrowerkzeug 45 und damit auch die Schleifscheibe 47 oder ein anderes entsprechendes Werkzeug in nahezu beliebiger Position relativ zur Tischplatte 12 des Werktisches 10 ausgerichtet werden. Im dargestellten Beispielsfall ist die Schleifscheibe 47 mit ihrer Oberfläche 50 um einen Winkel α zur Oberseite 13 der Tischplatte 12 geneigt, so daß das Werkstück 14 vorne um den Winkel α schräg angeschliffen werden kann.

Zum Entsorgen der Schleifspäne 51 dient eine bei 60 angedeutete Absaugeinrichtung, deren Einzelheiten noch geschildert werden. In der Absaugeinrichtung 60 herrscht ein Unterdruck, so daß die Schleifspäne 51 in Richtung eines Pfeils 61 angesaugt und abgefördert werden.

Die Absaugeinrichtung 60 ist ebenfalls in ihrer Lage und Ausrichtung einstellbar. Mittels einer Schraube 62 ist sie auf einem dritten Arm 63 befestigt, der wiederum über eine Schraube 64 mit einem vierten Arm 65 verbunden ist. Der vierte Arm 65 ist mit einer Schraube 66 am Hals 44 des Elektrowerkzeugs 45 fixiert.

Mittels der Schrauben 62 und 64 kann daher die Absaugeinrichtung 60 z.B. parallel zur Oberfläche 50 der Schleifscheibe 47 verschoben werden (Pfeil 67) oder auch senkrecht dazu, d.h. in Richtung der Schleifscheibenachse 48 (Pfeil 68).

Die Absaugeinrichtung 60 kann damit so positioniert und ausgerichtet werden, daß sie einen möglichst großen Anteil der anfallenden Schleifspäne 51 erfaßt und absaugt.

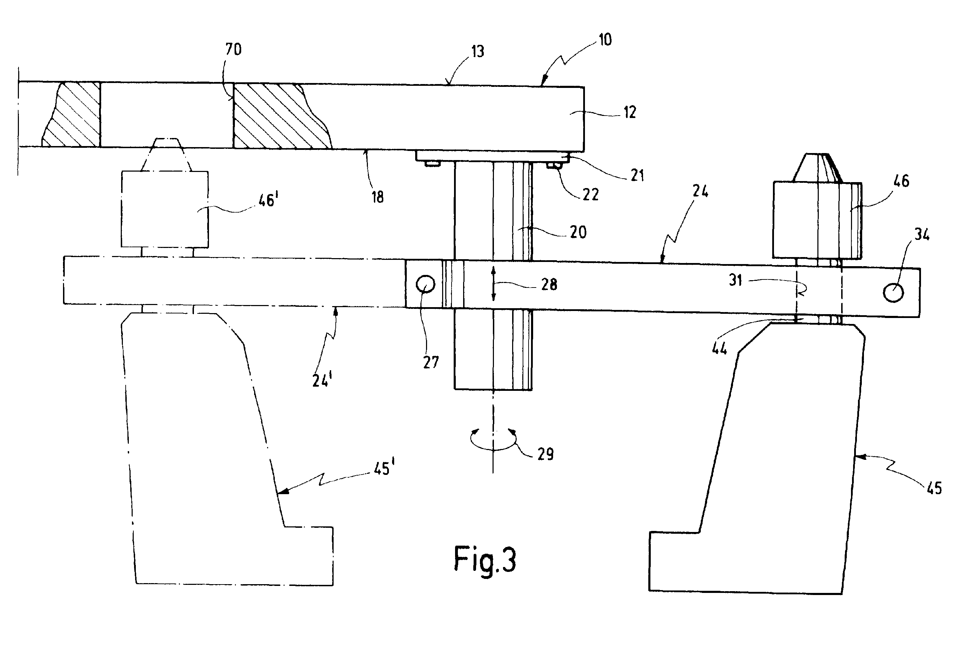

Bei der in Fig. 3 dargestellten vereinfachten Variante einer Spanneinrichtung für ein Elektrowerkzeug ist der erste Arm 24 in der bereits beschriebenen Weise an dem Profil 20 befestigt, das gegen die Unterseite 18 der Tischplatte 12 des Werktischs 10 geschraubt ist.

Im Gegensatz zur Spannvorrichtung gemäß Fig. 1 befindet sich jedoch bei der Spannvorrichtung gemäß Fig. 3 der Hals 66 des Elektrowerkzeugs 45 in der zweiten Aufnahmeöffnung 31, so daß das Spannfutter 46 nach oben weist. Auch mit dieser vereinfachten Ausführung einer Spannvorrichtung ist damit ein Arbeiten von oben her möglich, ähnlich wie dies weiter oben zu Fig. 1 beschrieben wurde.

Da man den ersten Arm 24 um die Achse des Profils 20 in einer Horizontalebene verdrehen kann (Pfeil 29), kann man den Arm 24 auch in die in Fig. 3 strichpunktiert gezeigte Position 24' verschwenken, in der sich der Arm 24' unterhalb der Tischplatte 12 befindet. Wenn nun die Tischplatte 12 im Bereich des Spannfutters 46 mit einer entsprechenden Öffnung 70 versehen wird, kann man gefahrlos von oben arbeiten und sich dabei z.B. auf der Oberseite 13 der Tischplatte 12 abstützen. Das für die jeweilige Bearbeitungsaufgabe verwendete Werkzeug, also z.B. die weiter unten noch im einzelnen geschilderte Schleifrolle oder eine Schleifscheibe oder ein Fräser oder eine Stichsäge oder dgl., ragt dabei durch die Öffnung 70. Ein Bearbeitungsvorgang kann dann in einfacher Weise dadurch vorgenommen werden, daß das Werkstück wiederum auf der Oberseite 13 der Tischplatte 12 gegen das durch die Öffnung 70 ragende Werkzeug geführt wird.

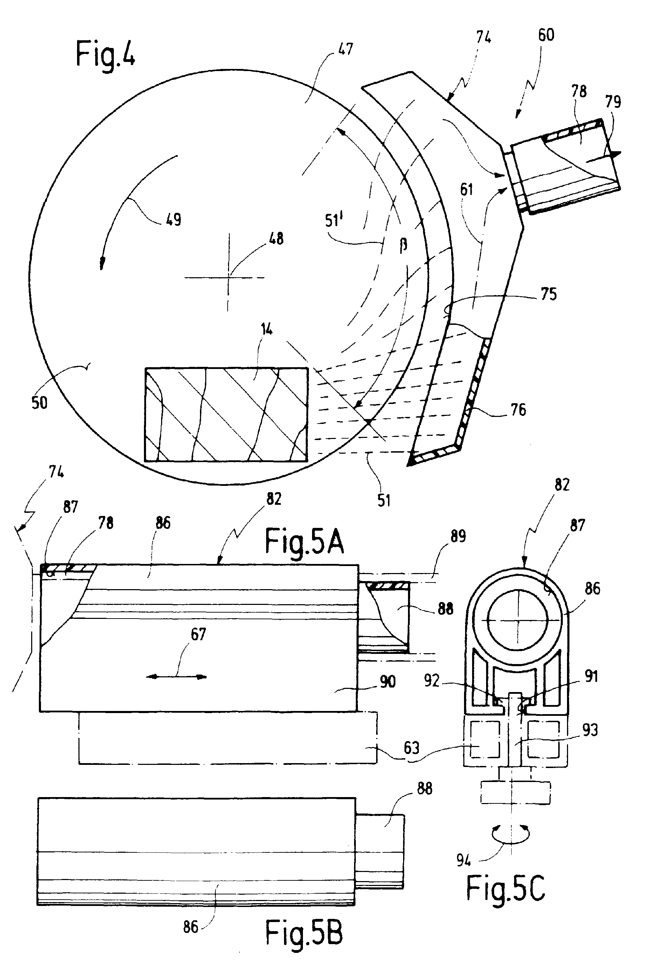

In den Fig. 4 und 5 sind weitere Einzelheiten der bereits erwähnten Absaugeinrichtung 60 dargestellt, und zwar zunächst anhand eines Beispiels, bei dem in der in Fig. 1 angedeuteten Weise die Absaugeinrichtung 60 mit der Schleifscheibe 47 zusammenarbeitet. Fig. 4 stellt insoweit eine Draufsicht auf die Schleifscheibe 47 dar.

Wie man erkennt, wird die Absaugeinrichtung 60 an ihrem vorderen Ende durch eine Saugdüse 74 gebildet. Die Saugdüse 74 ist näherungsweise kreisbogenförmig ausgebildet und umgibt den Umfang der Schleifscheibe 47 über einen Umfangswinkel β, der z.B. im Bereich zwischen 80° und 120° liegen kann. Die Saugdüse 74 ist an ihrer der Schleifscheibe 47 zu weisenden Vorderseite mit einer über den Umfangswinkel β durchgehenden Öffnung 75 versehen, während sie nach hinten durch eine entsprechende Wandung 76 abgeschlossen ist.

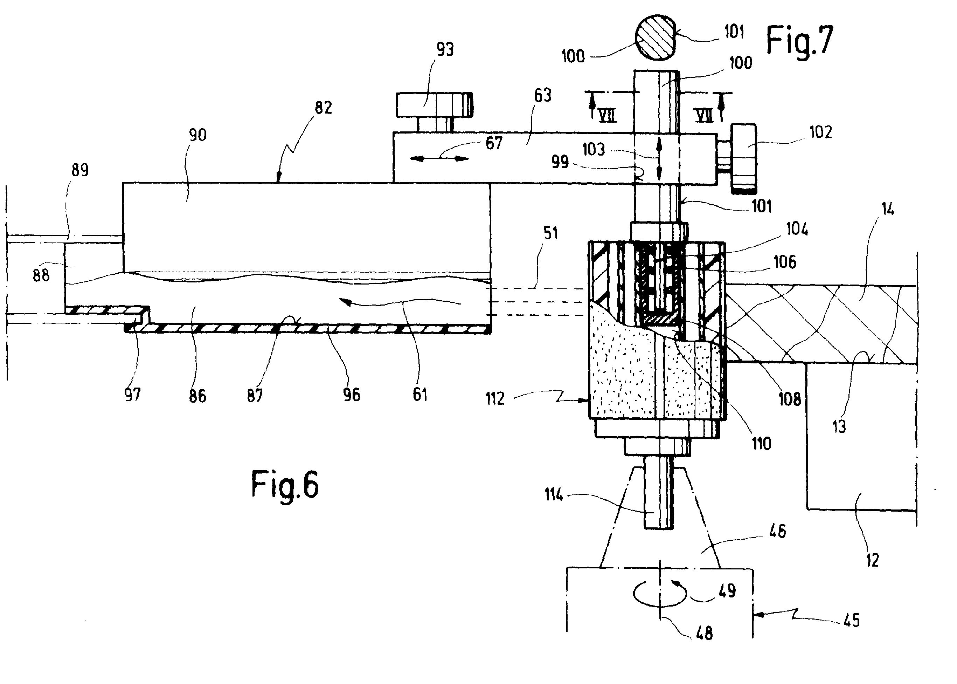

Die Saugdüse 74 kann einen (nicht dargestellten) Arm aufweisen, dessen freies Ende in der Achse 48 der Schleifscheibe 47 drehbar gelagert ist. In diesem Falle ist die Saugdüse 74 in ihrer Lage relativ zur Schleifscheibe 47 fixiert, und zwar unabhängig davon, ob das Elektrowerkzeug seinerseits raumfest eingespannt oder von Hand geführt wird. Diese Variante wird weiter unten zu Fig. 6 anhand eines Ausführungsbeispieles mit einer Schleifrolle noch im einzelnen erläutert werden.

An der Rückseite der Saugdüse 74 befindet sich ein Stutzen 78, an dem ein Unterdruck anlegbar ist, wie mit einem Pfeil 79 angedeutet.

Wenn nun in der bereits in Fig. 1 dargestellten Weise das Werkstück 14, z.B. die Holzleiste, gegen die Oberfläche 50 der Schleifscheibe 47 gedruckt wird, die sich dabei um ihre Achse 48 dreht (Pfeil 49), so werden die bereits erwähnten Schleifspäne 51 erzeugt. Die Schleifspäne 51 werden bei der in Fig. 4 dargestellten Drehung der Schleifscheibe 47 im Gegenuhrzeigersinn in etwa tangential nach rechts geschleudert, also gerade dorthin, wo sich die Saugdüse 74 befindet. Die rotierende Schleifscheibe 47 erzeugt zusätzlich an ihrer rauhen Oberfläche 50 eine Luftströmung in Umfangsrichtung. Diese Luftströmung verleiht einigen der Schleifspäne eine Bewegungskomponente in Drehrichtung, so daß diese in der Darstellung gemäß Fig. 4 teilweise nach oben mitgenommen werden, wie mit 51' angedeutet. Dies ist der Grund, warum die Saugdüse 74 über einen relativ großen Umfangswinkel β am Umfang der Schleifscheibe 47 angeordnet ist.

Um den gewünschten Unterdruck in der Saugdüse 74 einzustellen, sind verschiedene Vorgehensweisen möglich.

Am einfachsten ist es, auf den Stutzen 78 einen entsprechenden Schlauch eines Staubsaugers aufzustecken und den Staubsauger einzuschalten.

Um die gewünschte Verstellbarkeit der Saugdüse 74 herzustellen, die bereits anhand der Spannvorrichtung gemäß Fig. 1 geschildert wurde, ist jedoch eine Anordnung bevorzugt, die in Fig. 5A bis 5C in drei Ansichten dargestellt ist.

Man erkennt dort ein insgesamt mit 82 bezeichnetes Saugteil, das in Richtung des Pfeiles 67 auf dem dritten Arm 63 verschiebbar angeordnet ist.

Das Saugteil 82 umfaßt einen in Fig. 5A oberen Abschnitt 86, der im wesentlichen durch ein durchgehendes Rohr 87 gebildet wird. Das Rohr 87, in das an seinem in Fig. 5A linken Ende z.B. der Stutzen 78 der Saugdüse 74 dicht eingeschoben werden kann, ist an seinem in Fig. 5A rechten Ende mit einem weiteren Stutzen 88 versehen. Auf diesen Stutzen 88 läßt sich ein Schlauch 89 eines Staubsaugers aufschieben. Die Zwischenschaltung des Saugteils 82 hat dabei den Vorteil, die Saugdüse 74 einerseits im Betrieb zu fixieren und andererseits auch in ihrer Position und Ausrichtung einstellbar zu machen.

Ein in Fig. 5A unterer Abschnitt 90 des Saugteils 82 ist im Bodenbereich mit einem durchgehenden Längsschlitz 91 versehen. Oberhalb des Längsschlitzes 91 liegt eine Mehrkantmutter 92, die dort unverdrehbar zwischen zwei Stegen gehalten ist. Durch die Mutter 92 ist eine Schraube 93 geführt, die in die Mutter 92 eindrehbar ist (bei 94), so daß insgesamt das Saugteil 82 mit dem dritten Arm 63 durch Verschieben entlang des Längsschlitzes 91 einstellbar und durch Anziehen der Schraube 93 fixierbar ist.

Es wurde bereits erwähnt, daß der dritte Arm 63 wiederum auf einem anderen Arm (vierter Arm 65 in Fig. 1) verstellbar befestigt sein kann, um weitere Freiheitsgrade der Verstellbarkeit zu erhalten.

Bei der in Fig. 6 dargestellten weiteren Absaugvorrichtung ist das Saugteil 82 gegenüber der Position in Fig. 5A mit der Unterseite nach oben angeordnet, und der Stutzen 88 des Saugteils 82 befindet sich nunmehr auf der linken Seite. Der dritte Arm 63 erstreckt sich weit über das Saugteil 82 nach rechts. An seinem freien Ende ist eine dritte Aufnahmeöffnung 99 vorgesehen, durch die hindurch sich ein angeflachtes Rundprofil 100 erstreckt. Dessen ebene Vorderseite ist mit 101 bezeichnet. Das Rundprofil 100 ist in axialer Richtung in der dritten Aufnahmeöffnung 99 verschiebbar (Pfeil 103). Um das Rundprofil 100 in einer bestimmten Stellung fixieren zu können, ist eine Schraube 102 in die Stirnseite des dritten Armes 63 eingeschraubt. Wenn das freie Ende der Schraube 102 gegen die ebene Vorderseite 101 des Rundprofils 100 geschraubt wird, ist das Profil 100 im dritten Arm 63 fixiert.

An seinem unteren Ende läuft das Rundprofil 100 in einen zentrischen Zapfen 104 aus. Der Zapfen 104 ist mit dem Rundprofil 100 starr verbunden. Der Zapfen 104 wird von einem oder mehreren Kugellagern 106 umgeben, um eine Hülse 108 auf dem Zapfen 104 drehbar anzuordnen. Die Hülse 108 ist mittels nicht dargestellter Mittel gegenüber dem Zapfen 104 axial fixiert.

Die drehbare Hülse 108 taucht reibschlüssig in eine Aufnahme 110 einer Schleifrolle 112 ein, so daß diese mit einer gewissen Haltekraft von ihr gehalten wird und gleichzeitig um ihre Längsachse drehbar ist, die mit der Längsachse des Rundprofils 100 zusammenfällt.

Die Schleifrolle 112 ist mit einem in dieser Lage nach unten weisenden Dorn 114 versehen. Wenn der Dorn 114 in das Spannfutter 46 des Elektrowerkzeugs 45 eingespannt wird, das sich seinerseits in einer Spannvorrichtung, bspw. gemäß Fig. 1 oder Fig. 3, befindet, kann die Schleifrolle 112 um die Achse 48 gedreht werden (Pfeil 49).

Wenn das Werkstück 14 nun z.B. auf der Oberseite 13 der Tischplatte 12 mit seinem vorderen Ende gegen die rotierende Schleifrolle 112 geführt wird, werden wiederum Schleifspäne 51 erzeugt. Diese fliegen in tangentialer Richtung von der Schleifrolle 112 weg. In dem in Fig. 6 dargestellten Beispielsfall ist nun das Saugteil 12 so relativ zur Schleifrolle 112 positioniert (Pfeile 67 und 103), daß die erzeugten Späne 51 unmittelbar in den Fangbereich des durchgehenden Rohrs 87 gelangen und folglich angesaugt werden (Pfeil 61).

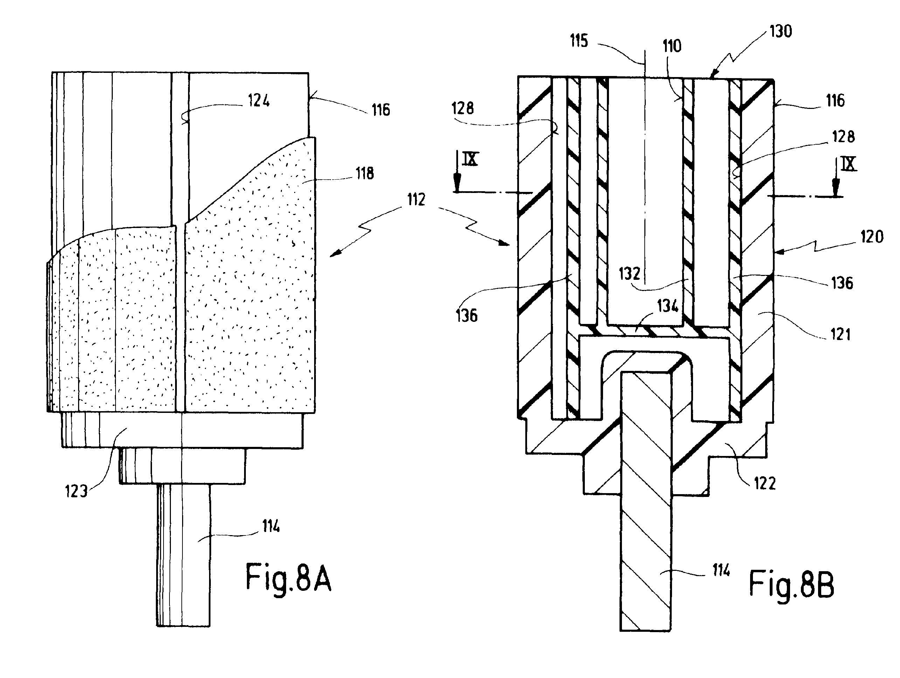

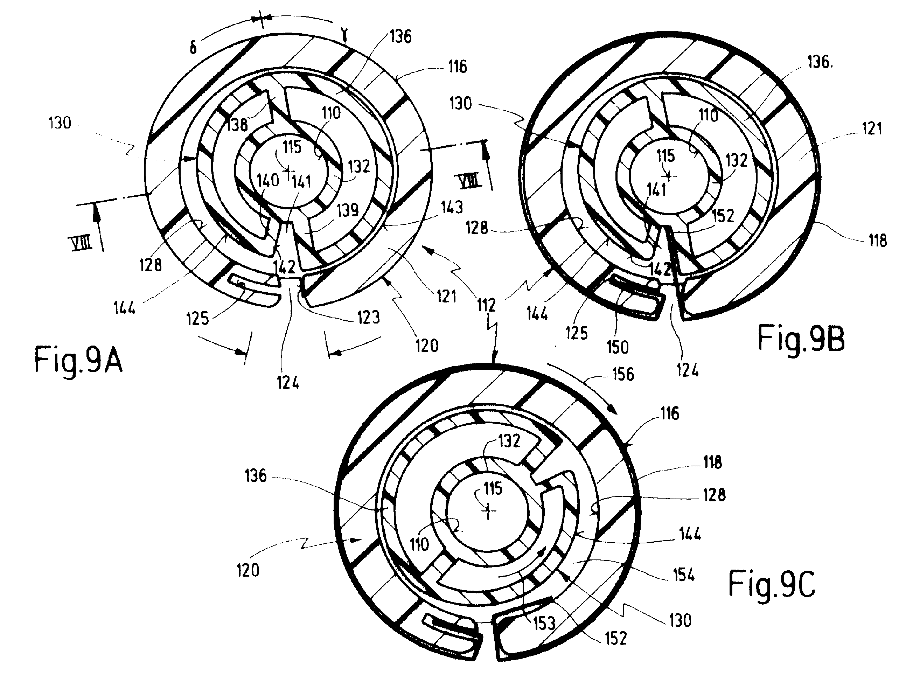

Einzelheiten der Schleifrolle 112 sind in den Fig. 8A, 8B und 9A, 9B und 9C in vergrößertem Maßstab dargestellt.

Die Schleifrolle 112 hat einen im wesentlichen zylindrischen Umfang 116. Um den Umfang 116 ist ein Schleifpapierstreifen 118 gewickelt und fixiert, wie noch beschrieben werden wird.

Wie man besonders gut aus dem Längsschnitt gemäß Fig. 8B erkennt, umfaßt die Schleifrolle 112 ein äußeres Topfteil 120 mit einer zylindrischen Wand 121 und einem unteren Boden 122. In den Boden 122 ist der Dorn 114 axial eingespritzt, so daß eine Längsachse 115 der Schleifrolle 112 definiert ist.

Das Topfteil 120 ist in seiner Unterseite an seinem Umfang mit einem sektorförmigen Ausschnitt 123 versehen, der auch in Fig. 9A zu erkennen ist und der das noch zu erläuternde Einfädeln bzw. Entfernen des Schleifpapierstreifens 118 erleichtert.

Die zylindrische Wand 121 geht nicht um den gesamten Umfang 116 durch. An einer Umfangsposition (in Fig. 9A bis 9C unten) befindet sich nämlich ein Radialschlitz 124. In diesen Radialschlitz 124 mündet ein Umfangsschlitz 125, der sich in der zylindrischen Wand 121 in der Darstellung gemäß Fig. 9A links vom Radialschlitz 124 weg erstreckt, bspw. 10 mm in die zylindrische Wand 121 hinein. Die Schlitze 124 und 125 gehen über die gesamte Mantellänge des Topfteils 120 durch.

Die zylindrische Wand 121 definiert eine zylindrische Innenoberfläche 128. In dem so gebildeten zylindrischen Innenraum befindet sich ein gegenüber dem Topfteil 120 um die Achse 115 drehbares Drehteil 130.

Das Drehteil 130 umfaßt eine innere zylindrische Wand 132, die über einen radialen Zwischenboden 134 mit einer äußeren Wand 136 des Drehteils 130 verbunden ist. Außerdem sind die innere zylindrische Wand 132 und die äußere Wand 136 noch über drei radiale Stege 138, 139 und 140 miteinander verbunden. Die Stege 138, 139 befinden sich auf diametral gegenüberliegenden Positionen. Der Steg 140 hingegen befindet sich in der Nähe des Steges 139 und ist bspw. gegenüber diesem um 20° Umfangswinkel versetzt. Der Steg 140 ist auch kürzer als die gleichlangen Stege 138 und 139. Von diesem kürzeren Steg 140 führt eine abgerundete Ecke 142 außen zur äußeren Wand 136.

Der Verlauf der äußeren Wand 136 ist nun so gewählt, daß sie in einem Abschnitt 143 zwischen den gleich langen Stegen 138 und 139 zylindrisch verläuft, während sie entlang eines Abschnitts 144 zwischen dem längeren Steg 138 und dem kürzeren Steg 140 entlang einer Spiralbahn verläuft. Der vom zylindrischen Abschnitt 143 überspannte Umfangswinkel y beträgt vorzugsweise 180°, während der vom spiraligen Abschnitt 44 überspannte Umfangswinkel δ bspw. 160° beträgt. Es versteht sich jedoch, daß von diesen Werten auch Abweichungen möglich sind.

Der zylindrische Abschnitt 143 ist an die innere zylindrische Wand 132 angepaßt, so daß sich das Drehteil 130 im wesentlichen koaxial zur Achse 125 dreht. Ein geringer seitlicher Versatz ist jedoch möglich, weil der spiralige Abschnitt 144 einen vom längeren Steg 138 zum kürzeren Steg 140 zunehmenden Abstand von der zylindrischen Innenoberfläche 128 einhält.

Um nun den rechteckförmigen Schleifpapierstreifen 118 am Körper der Schleifrolle 112 zu befestigen, wird wie folgt vorgegangen: Zunächst wird ein erstes Ende 150, d.h. eine erste Seitenkante des Schleifpapierstreifens 118, in den Radialschlitz 124 der zylindrischen Wand 121 eingeführt und von dort gleich nach links in den Umfangsschlitz 125 gesteckt.

Der Schleifpapierstreifen 118 wird nun um den zylindrischen Umfang 116 des Topfteils 120 herum gewunden (Fig. 9B).

Sofern dies nicht bereits der Fall ist, wird nun das Drehteil 130 so lange verdreht, bis der Radialschlitz 141 zwischen den Stegen 139 und 140 im Drehteller 130 mit dem Radialschlitz 124 in der zylindrischen Wand 121 des Topfteils 120 fluchtet (dies ist die bereits in Fig. 9A und auch in 9B gezeigte Stellung).

Das andere, zweite Ende 152 des Schleifpapierstreifens 118 wird nun zunächst durch den äußeren Radialschlitz 124 und dann in den dahinterliegenden Radialschlitz 141 eingesteckt, wie dies deutlich in Fig. 9B zu erkennen ist.

Aus dieser Position heraus wird nun das Drehteil 130 im Gegenuhrzeigersinn (Pfeil 153 in Fig. 9C) verdreht. Dies bewirkt, daß das zweite Ende 152 aus dem sich nunmehr entfernenden Radialschlitz 141 wieder herausrutscht, über die abgerundete Ecke 142 gleitet und sich an die zylindrische Innenoberfläche 128 anlegt. Dafür ist zunächst noch Raum, weil anfänglich der spiralige Abschnitt 144 in radialer Richtung einen beträchtlichen Abstand zur zylindrischen Innenoberfläche 128 einhält. Der Spalt 154 zwischen Abschnitt 144 und Innenoberfläche 128 verjüngt sich jedoch mit zunehmender Drehung des Drehteils 130, mit der Folge, daß das zweite Ende 152 zwischen dem Abschnitt 144 und der Innenoberfläche 128 eingezwängt, dabei in Drehrichtung des Drehteils 130 (Pfeil 153) gezogen und schließlich fixiert wird.

Auf diese Weise ergibt sich eine beträchtliche Spannung des Schleifpapierstreifens 118 über den zylindrischen Umfang 116, wie in Fig. 9C mit einem Doppelpfeil 156 angedeutet ist.

Da sich der Spalt 154 unter einem sehr kleinen Winkel verengt und darüber hinaus der Schleifpapierstreifen 118 an seiner am Abschnitt 144 anliegenden Oberfläche mit Schleifmaterial versehen ist, tritt bei genügender Drehung des Drehteils 130 Selbsthemmung ein. Die Schleifrolle 112 kann daher in diesem Zustand genommen und für Bearbeitungsaufgaben (vgl. Fig. 6) eingesetzt werden.

Um den Schleifpapierstreifen 118 zu einem späteren Zeitpunkt wieder zu entfernen, ist es lediglich erforderlich, das Drehteil 130 im Uhrzeigersinn zu verdrehen, wodurch sich der Sitz des zweiten Endes 152 des Schleifpapierstreifens 118 lockert und dieser herausgezogen werden kann. Um in diesem Falle einen Zugriff von beiden Stirnseiten der Schleifrolle 112 zu ermöglichen, ist der bereits erwähnte Ausschnitt 123 am unteren Ende des Topfteils 120 vorgesehen.

## Patentansprüche

1. Späneabsaugeinrichtung für Elektrowerkzeuge (45), mit einer Saugdüse (74; 82-97), wobei das Elektrowerkzeug (45) ein rotierendes Werkzeug antreibt, dadurch gekennzeichnet, daß die Saugdüse (74; 82-97) am Werkzeug gelagert ist.

2. Einrichtung nach Anspruch 1, dadurch gekennzeichnet, daß die Saugdüse (82-97) in einer Drehachse (115) des Werkzeugs gelagert ist.

3. Einrichtung nach Anspruch 2, dadurch gekennzeichnet, daß das Werkzeug an einer radialen Stirnseite eine in der Drehachse (115) liegende Aufnahme (110) für einen mit der Saugdüse (82-97) verbundenen Drehzapfen (104-108) und an einer anderen radialen Stirnseite einen Dorn (114) zum Einspannen in ein Spannfutter (46) des Elektrowerkzeuges (45) aufweist.

4. Späneabsaugeinrichtung, insbesondere nach einem oder mehreren der Ansprüche 1 bis 3, dadurch gekennzeichnet, daß die Saugdüse (74; 82-97) an einem Kragen (37; 43) eines Statives (24; 39) befestigt ist, mit dem das Elektrowerkzeug (45) gehalten ist, wobei der Kragen (37; 43) den Hals (44) des Elektrowerkzeuges (45) zumindest teilweise umgreift.

5. Einrichtung nach einem oder mehreren der Ansprüche 1 bis 4, dadurch gekennzeichnet, daß die Saugdüse (74; 82-97) mit dem Elektrowerkzeug (45) bzw. mit dem Kragen (37; 43) über ein verstellbares Gestänge (63, 65) verbunden ist.

6. Späneabsaugeinrichtung nach einem oder mehreren der Ansprüche 1 bis 5, dadurch gekennzeichnet, daß die Saugdüse (74; 82-97) radial zum Werkzeug, insbesondere zu einer Drehachse (48; 115) des Werkzeugs, gerichtet ist.

7. Einrichtung nach Anspruch 6, dadurch gekennzeichnet, daß die Saugdüse (74) eine Saugöffnung (75) aufweist, die in ihrer Formgebung an ein in das Elektrowerkzeug (45) eingespanntes Werkzeug angepaßt ist.

8. Einrichtung nach Anspruch 7, dadurch gekennzeichnet, daß die Formgebung der Öffnung (75) ferner an eine durch das bewegte Werkzeug beeinflußte Flugbahn (51') der Späne (51) angepaßt ist.

9. Einrichtung nach Anspruch 7 oder 8, dadurch gekennzeichnet, daß das Werkzeug eine scheibenförmige Gestalt aufweist und daß die Öffnung (75) kreisbogenförmig um einen Teil des Umfanges der Scheibe liegt.

10. Einrichtung nach Anspruch 9, dadurch gekennzeichnet, daß die Öffnung einen Umfangswinkel (β) der Scheibe von vorzugsweise 40° bis 140°, insbesondere etwa 100°, übergreift.

11. Einrichtung nach einem oder mehreren der Ansprüche 1 bis 10, dadurch gekennzeichnet, daß die Saugdüse (82-97) im wesentlichen rohrförmig (87) ist.

12. Einrichtung nach einem oder mehreren der Ansprüche 1 bis 11, dadurch gekennzeichnet, daß das Werkzeug eine Schleifrolle (112) ist.

13. Einrichtung nach einem oder mehreren der Ansprüche 1 bis 11, dadurch gekennzeichnet, daß das Elektrowerkzeug (45) an einer Tischplatte (12) eines Werktisches (10) befestigt ist.

14. Einrichtung nach einem oder mehreren der Ansprüche 1 bis 13, dadurch gekennzeichnet, daß die Saugdüse (74; 82-97) einen Stutzen (78) zum Aufschieben eines Saugschlauches (89) aufweist.

15. Einrichtung nach einem oder mehreren der Ansprüche 1 bis 14, dadurch gekennzeichnet, daß die Saugdüse (74) einen ersten Stutzen (78) zum Aufschieben eines Saugteils (82) aufweist, und daß das Saugteil (82) mit Verstellmitteln (91-94) der relativen Lage zwischen Saugdüse (74) und Elektrowerkzeug (45) versehen ist.

16. Einrichtung nach Anspruch 15, dadurch gekennzeichnet, daß das Saugteil (82) ein Rohr (87) aufweist, das den ersten Stutzen (78) mit einem zweiten Stutzen (88) verbindet und daß ein Saugschlauch (89) auf den zweiten Stutzen (88) aufschiebbar ist.
